Europäisches Patentamt

European Patent Office

Office européen des brevets

(11) Numéro de publication: **0 271 376 B1**

# FASCICULE DE BREVET EUROPEEN

(45) Date de publication de fascicule du brevet:
**10.04.91**

(51) Int. Cl.⁵: **A23B 7/02**, F26B 21/04

(21) Numéro de dépôt: **87402504.2**

(22) Date de dépôt: **05.11.87**

(54) **Four pour le traitement de fruits, en particulier pour la transformation de prunes vertes en pruneaux par dessiccation.**

(30) Priorité: **05.11.86 FR 8615417**

(43) Date de publication de la demande:
**15.06.88 Bulletin 88/24**

(45) Mention de la délivrance du brevet:
**10.04.91 Bulletin 91/15**

(84) Etats contractants désignés:
**AT BE CH DE ES FR GB GR IT LI LU NL SE**

(56) Documents cités:
**EP-A- 0 079 523        DE-A- 2 746 927**
**DE-A- 3 248 581        FR-A- 2 535 445**
**FR-A- 2 538 887        FR-A- 2 551 538**
**FR-A- 2 566 106        GB-A- 2 079 913**

(73) Titulaire: **S.A. Auximat Levage**
**Z.A. du Grand Pré**
**F-95640 Marines(FR)**

(72) Inventeur: **Petit, Gaston**
**8, rue des Coquelicots**
**F-95000 Cergy(FR)**
Inventeur: **Monteiro, Daniel**
**11, rue Georges Buffon**
**F-78200 Mantes La Jolie(FR)**

(74) Mandataire: **Peuscet, Jacques et al**
**Cabinet Peuscet 68, rue d'Hauteville**
**F-75010 Paris(FR)**

## Description

L'invention concerne le traitement des fruits, et plus particulièrement la dessiccation de prunes vertes afin de les transformer en pruneaux.

Cette opération, qui se faisait initialement au soleil, fait maintenant intervenir des fours. Jusqu'à présent, on a utilisé à cet effet des fours classiques, le plus souvent en briques, et totalement fermés.

Par ailleurs, ces fours fonctionnent avec un air totalement neuf et évacué ensuite.

Il en résulte que le coût proportionnel de la transformation des prunes en pruneaux est principalement dû aux calories dépensées à cet effet, et qui sont évaluées à l'heure actuelle aux environs de 50 centimes par kilogramme de prunes. De tels coûts, au niveau de la production, sont loin d'être négligeables.

Il est connu par FR-A- 2 566 106 un procédé de séchage par ventilation d'air de prunes destinées à la fabrication de pruneaux dans lequel on souffle de l'air chaud homogène en vitesse à travers les couches de pruneaux et sensiblement perpendiculairement à celles-ci. On recycle le gaz humide obtenu après passage et on le réchauffage ce qui nécessite une dépense de calories importantes.

Dans EP-A-0 079 523, on décrit une installation de séchage compliquée qui comporte plusieurs sources d'énergie dont une est située à l'intérieur du four et risque donc d'être en contact avec le produit traité et de le dégrader.

La présente invention a pour but de permettre une réduction des coûts de transformation des prunes vertes en pruneaux.

L'invention a également pour but de fournir une installation permettant un fonctionnement automatique, et notamment l'usage d'un four non nécessairement fermé.

Le four proposé à cet effet est du type comprenant une enceinte munie de moyens de chauffage et de moyens de brassage d'air.

Selon une caractéristique de l'invention, l'enceinte, qui possède une double paroi calorifugée, est définie comme un tunnel muni de moyens formant un rideau d'air à son entrée ainsi qu'un autre rideau d'air à sa sortie; et les moyens de brassage d'air effectuent une recirculation totale de l'air contenu dans l'enceinte, après filtrage et condensation de vapeur d'eau sur une paroi froide.

Avantageusement, les moyens de chauffage comprennent des organes de chauffage électrique placés en aval du dispositif de condensation de vapeur d'eau.

Selon un autre aspect de l'invention, les moyens de brassage opèrent entre une gaine de reprise et une gaine de soufflage, situées latéralement, sur des côtés opposés du tunnel.

De préférence, le four comporte au moins une chaîne transporteuse ou tapis métallique définissant au moins un niveau de support d'une pile de claies à l'intérieur de l'enceinte calorifugée. Cependant, on peut également opérer par apport de chariots porteurs d'une pile de claies à l'intérieur de l'enceinte.

Dans un mode de réalisation intéressant, les claies sont supportées par des traverses qui contribuent à la reprise de l'air.

Il est alors avantageux que les moyens de soufflage comportent des buses pour orienter l'air recyclé chaud vers la partie supérieure et/ou inférieure des claies.

D'autres caractéristiques et avantages de l'invention apparaîtront à l'examen de la description détaillée ci-après, ainsi que des dessins annexés, sur lesquels :

- la figure 1 est une vue en coupe longitudinale d'un four selon l'invention;
- la figure 2 est une vue de dessus, avec arrachement partiel dans le coin supérieur gauche, du four selon l'invention;
- la figure 3 est une vue en coupe suivant la ligne de coupe III-III de la figure 2; et
- la figure 4 est une vue en coupe suivant la ligne de coupe IV-IV de la figure 2.

Les dessins annexés comportent des éléments géométriques de caractère certain. Ils pourront donc non seulement servir à mieux faire comprendre la description détaillée ci-après, mais aussi contribuer à la définition de l'invention, le cas échéant.

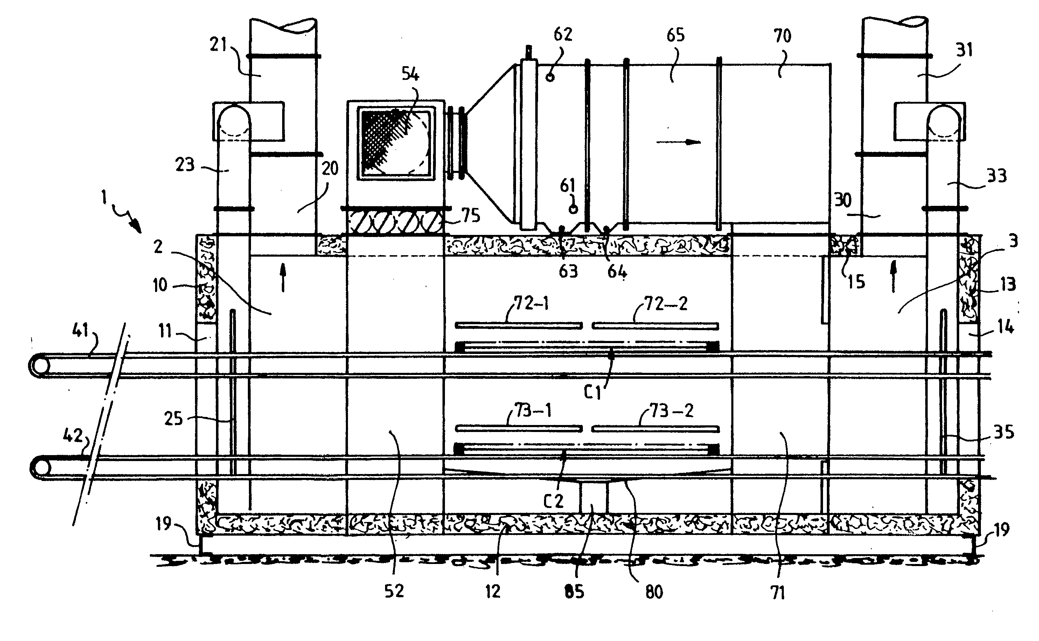

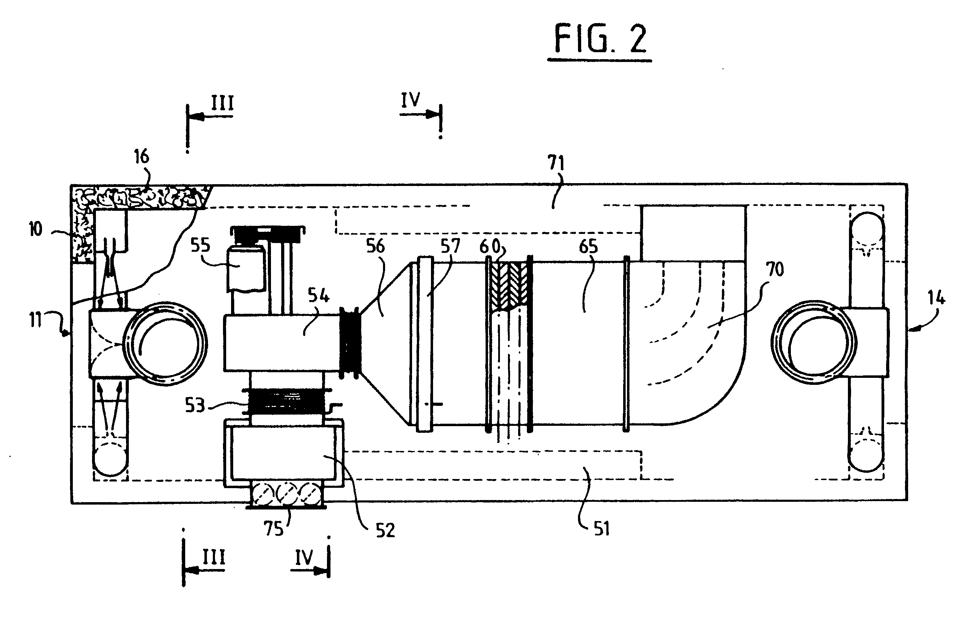

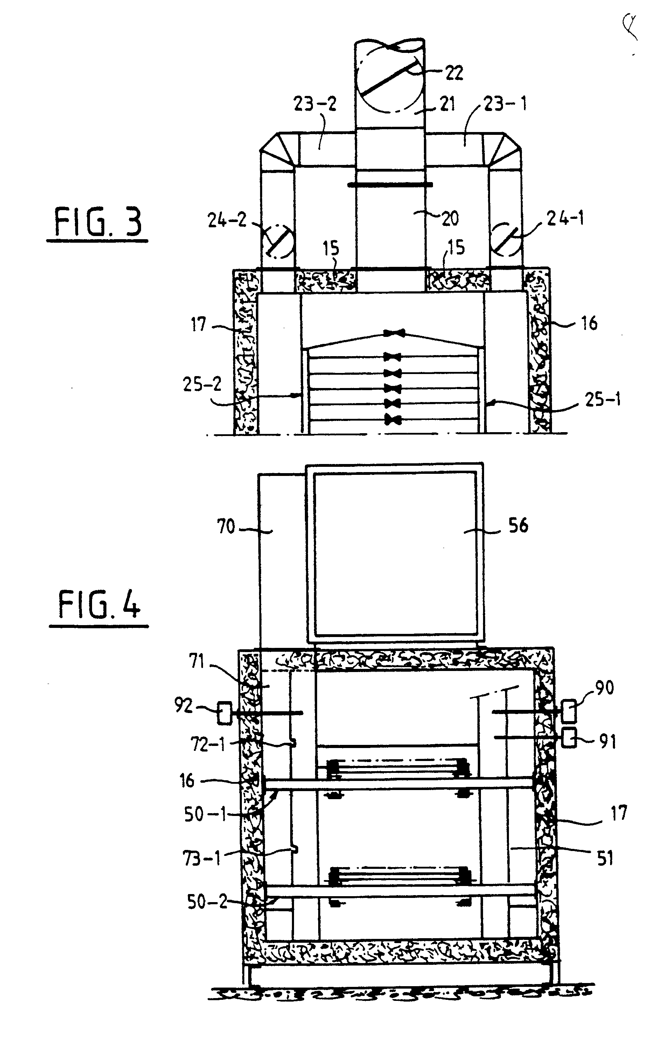

Sur la figure 1, l'enceinte du four est désignée généralement par 1. Elle comporte une double paroi, les deux parois étant séparées par de la laine de verre. Ainsi, sa paroi d'extrémité gauche 10 définit un passage d'entrée 11. On reconnaît sur la figure 1 le fond 12 en laine de verre qui parcourt toute la longueur de l'enceinte. A droite, une paroi verticale 13 est ouverte pour le passage de sortie 14. La partie supérieure de l'enceinte est visible en 15. On distingue sur la figure 2 le côté 16 de l'enceinte, qui apparaît aussi sur la figure 3. Et c'est sur cette dernière que l'on voit l'autre côté opposé 17 de cette enceinte.

Le passage d'entrée 11 est fermé par un rideau d'air 2 lorsque le mode de support des piles de claies est un tapis roulant ou par une silhouette entrée (non représentée) lorsque le mode de support est un chariot. Le rideau d'air 2 est défini par un ventilateur de reprise 20, dont la conduite de sortie 21 communique avec l'air ambiant par un registre réglable 22. L'air soufflé est retransmis par des conduites latérales coudées 23-1 et 23-2 vers d'autres registres de réglage 24-1 et 24-2 qui font finalement descendre l'air vers deux fentes de sortie 25-1 et 25-2 disposées face à face.

Un montage analogue est prévu pour le passage de sortie 14. Il s'agit des organes 3, qui sont semblables aux organes d'entrée 2, et possèdent les mêmes références numériques augmentées de 10 unités.

Des claies peuvent être amenées individuellement sur deux tapis roulants 41 et 42 pénétrant le four, le cas échéant à travers des réservations pour le passage de parois. On voit de telles réservations pour la partie basse du tapis roulant inférieur dans les doubles parois d'extrémités 10 et 13.

Ce tapis roulant permet d'amener des claies C1 et C2 dans la partie centrale du four.

A ce niveau, les deux parties de chaque tapis roulant chevauchent des traverses 50-1 et 50-2 (figure 4), munies de moyens permettant la reprise d'air, et le transfert de cet air vers une gaine de reprise latérale 51, adjacente à la paroi 17. Cette gaine de reprise 51 rejoint un caisson de reprise 52 (figure 2) qui communique par une manchette souple 53 avec l'orifice d'admission d'un ventilateur de brassage 54 dont l'arbre est entraîné par deux courroies depuis un moteur électrique 55. Le divergent de sortie 56 du ventilateur est relié à un filtre 57 qui peut être un filtre classique tel qu'utilisé dans les installations culinaires et de marque France Air ou similaire.

Le filtre 57 est suivi en 60 d'une batterie de refroidissement constituée d'un échangeur alimenté en eau froide.

Sur la figure 1, on distingue en 61 l'orifice d'entrée d'eau dans l'échangeur et en 62 son orifice de sortie.

Cette figure fait également apparaître des cuvettes ménagées en partie basse de la conduite logeant la batterie de condensation, et munies d'orifices d'évacuation des condensats 63 et 64.

L'air entre alors dans une batterie de chauffage électrique 65, qui peut être munie d'une puissance électrique de chauffage dont la puissance est fonction de la production.

Après filtrage et condensation puis chauffage, l'air recyclé atteint le caisson de soufflage courbe 70, puis une gaine latérale de soufflage 71, adjacente à la paroi 16 (figure 4). Cette gaine 71 est munie de buses 72-1, 72-2 en haut, ainsi que 73-1, 73-2 en bas, pour permettre le soufflage de l'air sur l'ensemble de la surface de chacune des claies et/ou des étages des tapis que contient l'étuve.

A côté du caisson de reprise 52 est prévu un ensemble de registres 75 permettant le réglage du renouvellement d'air éventuel à l'intérieur de l'enceinte selon l'invention.

Alors que la technique antérieure utilisait de l'air totalement neuf pour la dessication des prunes, il s'est avéré qu'avec le dispositif selon l'invention, on peut se contenter d'un renouvellement d'air de l'ordre de quatre à cinq volumes par heure, environ.

Dans ces conditions, on obtient une production de pruneaux d'excellente qualité, avec un coût proportionnel (consommation d'énergie) qui peut être jusqu'à dix fois inférieure à ce que l'on connaissait jusqu'à présent.

Bien entendu, il est nécessaire d'assurer la régulation du four selon l'invention. Cela s'effectue à l'aide d'un capteur de température 90, d'un capteur de degré hygrométrique 91, et d'un capteur de température haute (sécurité) 92. Ces capteurs apparaissent sur la figure 4.

## Revendications

1. Four pour le traitement de fruits, en particulier pour la dessication de prunes vertes afin de les transformer en pruneaux, du type comprenant une enceinte (1) munie de moyens de chauffage et de moyens de brassage d'air, caractérisé en ce que l'enceinte (1) qui possède une double paroi calorifugée (10-17), est définie comme un tunnel muni de moyens (2,3) formant un rideau d'air à son entrée et à sa sortie, en ce que les moyens de brassage d'air (50-73) effectuent une recirculation totale de l'air contenu dans l'enceinte, après filtrage (57) et condensation de vapeur d'eau (60) sur une paroi froide et en ce que les moyens de chauffage comprennent des organes de chauffage électrique (65) placés en aval du dispositif de condensation de vapeur d'eau (60).

2. Four selon la revendication 1, caractérisé en ce que les moyens de brassage d'air opèrent entre une gaine de reprise (51) et une gaine de soufflage (71), situés latéralement, sur des côtés opposés du tunnel.

3. Four selon l'une des revendications précédentes, caractérisé en ce qu'il comporte au moins une chaine transporteuse (41,42) définissant au moins un niveau de support d'une pile de claies à l'intérieur de l'enceinte calorifugée.

4. Four selon l'une des revendications précédentes, caractérisé en ce que les claies sont supportées par des traverses (50) qui contribuent à la reprise de l'air.

5. Four selon l'une des revendications précédentes, caractérisé en ce que les moyens de soufflage comportent des buses (72,73) pour orienter l'air recyclé chaud vers la partie supérieure et/ou inférieure des claies.

## Claims

1. Oven for the treatment of fruit, especially for drying unripe plums in order to turn them into prunes, of the type comprising an enclosure (1) provided with heating means and air-agitating means, characterised in that the enclosure (1), wich has a heat-insulated double wall (10-17), is defined as a tunnel provided with means (2, 3) forming an air curtain at its entrance and at is exit, in that the air-agitating means (50-73) effect complete recirculation of the air in the enclosure after filtration (57) and condensation of water vapour (60) on a cold wall, and in that the heating means comprise electric heating members (65) located downstream of the water vapour condensation device (60).

2. Oven according to claim 1, characterised in that the air-agitating means act between a return conduit (51) and a blowing conduit (71), located laterally, on opposite sides or the tunnel.

3. Oven according to claim 1 or 2, characterised in that it comprises at least one conveyor chain (41, 42) which defines at least one support level of a stack of trays inside the heat-insulated enclosure.

4. Oven according to one of the preceding claims, characterised in that the trays are supported by crossbeams (50) wich contribute to the recirculation of the air.

5. Oven according to one of the preceding claims, characterised in that the blowing means comprise nozzles (72, 73) for directing the recirculated hot air towards the upper and/or lower part of the trays.

## Ansprüche

1. Ofen zur Behandlung von Früchten, insbesondere zur Trocknung frischer Pflaumen, aus denen Backpflaumen herzustellen sind, mit einem umschlossenen Raum (1), der Mittel zur Erwärmung und Mittel zur Luftbewegung aufweist, dadurch gekennzeichnet, dass der umschlossene Raum (1) der eine doppelte wärmeisolierte Wandung (10-17) hat als Tunnel ausgebildet ist, mit Mitteln (2, 3) welche einen Luftvorhang an seinem Eingang und seinem Ausgang bilden, dass die Mittel zur Luftbewegung (50-73) einen Gesamtumlauf der in dem Raum befindlichen Luft bewirken, nach Filterung (57) und Kondensation von Wasserdampf (60) an einer kalten Wandung, und dass die Mittel zur Erwärmung Organe zur elektrischen Heizung (65) enthalten, die abströmseitig der Einrichtung zur Kondensation von Wasserdampf (60) angeordnet sind.

2. Ofen nach Anspruch 1, dadurch gekennzeichnet, dass die Mittel zur Luftbewegung swischen einem Rückfürkanal (51) und einem Luftbewegungskanal (71) wirksam sind und diese seitlich an gegenüberliegenden Seiten des Tunnels angeordnet sind.

3. Ofen nach einem der Ansprüche 1 und 2, dadurch gekennzeichet, dass er wenigstens eine Transportkette (41, 42) enthält, welche wenigstens eine Ebene zur Aufnahme oder Abstützung eines Stapels von Horden im Inneren des wärmeisolierten Raumes bildet.

4. Ofen nach einem der Ansprüche 1 bis 3, dadurch gekennzeichnet, dass die Horden von Traversen (50) getragen oder abgestützt sind, die zur Verbesserung der Luftführung beitragen.

5. Ofen nach einem der Ansprüche 1 bis 4, dadurch gekennzeichnet, dass die Mittel zur Erzeugung von Luftbewegung Leiteinrichtungen (72, 73) aufweisen, welche die rückgeführte warme Luft zum oberen und/oder unteren Teil der Horden lenken.

# FIG. 2

III

IV

16

10

71

11

55

56

57

60

65

54

70

53

14

75

52

51

III

IV

EP 0 271 376 B1

FIG. 3

FIG. 4